# EUROPÄISCHE PATENTSCHRIFT

(11) **EP 1 599 271 B1**
(45) Veröffentlichungstag und Bekanntmachung des Hinweises auf die Patenterteilung: **07.06.2006**
(21) Anmeldenummer: 03815819.2
(22) Anmeldetag: 19.11.2003
(51) Int. Cl.: B01D 29/39

(54) **FILTRATIONSVORRICHTUNG**
FILTRATION DEVICE
DISPOSITIF DE FILTRATION

(30) Priorität: 13.02.2003 DE 10305865
(43) Veröffentlichungstag der Anmeldung: 30.11.2005
(73) Patentinhaber: ITN NANOVATION GMBH, 66117 Saarbrücken (DE)
(72) Erfinder: NONNINGER, Ralph, 66123 Saarbrücken (DE); BINKLE, Olaf, 66459 Kirkel (DE); VOLZ, Romeo, 66787 Wadgassen (DE); SCHMIDT, Hans-Jürgen, 88682 Salem (DE)
(74) Vertreter: Kohler Schmid Möbus
(86) Internationale Anmeldenummer: PCT/DE2003/003831
(87) Internationale Veröffentlichungsnummer: WO 2004/071620

(56) Entgegenhaltungen:
- EP-B- 0 340 914
- DE-A- 2 461 778
- DE-A- 19 807 769
- US-A- 3 737 036
- US-A- 4 369 112
- US-A- 5 035 799

## Beschreibung

Die Erfindung betrifft eine Filtrationsvorrichtung zur Filterung von Flüssigkeiten.

Insbesondere.bei der Trinkwassernachaufbereitung kann es notwendig sein, gewisse sich im Trinkwasser befindenden Stoffe zu entfernen. Bakterien und Viren können durch entsprechende chemische Behandlung des Wassers entfernt werden. Derartige Vorrichtungen sind jedoch relativ wartungsintensiv, da die Chemikalien nachgefüllt werden müssen. Außerdem ist das Wasser durch Chemikalien belastet.

US-A-5 035 799 beschreibt eine Filtrationsvorrichtung umfassend ein druckbeständiges Gehäuse aus Stahl mit einer Flüssigkeitseinlassöffnung und einer Filtratauslassöffnung, in die ein Sammelkanal mündet, an dem mindestens ein als Flachmembran ausgebildetes Filterelement druckdicht angeschlossen ist. Die Einlassöffnung zum Gehäuse wird dabei durch einen Verteilerkasten gebildet, der seitig geschlossen in den Tank eingebaut wird.

Filter werden beispielsweise zur Trennung von öl-Wasser-Emulsionen bei der spanabhebenden Fertigung, zur Klärung von Bier, zur Gasreinigung, zur Gastrennung oder zur Trennung von Flüssig-Feststoff-Gemischen eingesetzt.

### Aufgabe der Erfindung

Aufgabe der vorliegenden Erfindung ist es, eine kompakte und einfach handhabbare Filtrationsvorrichtung mit guter Filterwirkung bereit zu stellen, mit der Stoffe, insbesondere Bakterien und/oder Viren aus einer Flüssigkeit entfernt werden können, wobei die Filtrationsvorrichtung besonders einfach zu realisieren ein soll.

### Gegenstand der Erfindung

Gelöst wird diese Aufgabe erfindungsgemäß durch eine Filtrationsvorrichtung gemäß Anspruch 1.

Die zu filternde Flüssigkeit wird über die Flüssigkeitseinlassöffnung, an die eine Zuleitung angeschlossen sein kann, dem Behälter zugeführt. In dem Behälter steht die Flüssigkeit unter Druck und wird aufgrund des Druckes durch die Flachmembran gepresst, wobei zwischen der Außenseite der Flachmembran und ihrem Innern eine Druckdifferenz besteht. Das Gehäuse ist geeignet, die beim Filtern auftretenden Drücke aufzunehmen und ist daher drückstabil. Für das Gehäuse sind verschiedene Formen denkbar, beispielsweise eine Quaderform oder eine zylindrische Form. Die Flachmembran kann als poröse Funktionsschicht ausgebildet sein, aus deren Inneren das Filtrat abgeführt wird und die nahezu allseitig von der zu filternden Flüssigkeit anströmbar ist. Zur Filterung kleinerer Stoffe kann die Flachmembran eine feinporige filternde Funktionsschicht umfassen, die auf einer grobporigeren Trägerschicht, einem sogenannten Substrat, gehalten ist. Die Funktions- und Trägerschichten sind bevorzugt anorganische Schichten und somit verschleißfest, temperaturstabil, und weitgehend chemisch inert. Eine nahezu allseitig anströmbare Flachmembran, aus deren Inneren das Filtrat abführbar ist, weist ein günstiges Verhältnis von Membranfläche zu Volumen der Membran auf. Dies hat einen guten Wirkungsgrad zur Folge. Das Filtrat wird aus dem Inneren der Flachmembran dem Sammelkanal zugeführt und kann über die Auslassöffnung abgeführt oder abgesaugt werden. Das Filterelement kann unmittelbar oder mittelbar über zusätzliche Konstruktionen an den Sammelkanal angeschlossen sein, wobei die Anbindung des Filterelement an den Sammelkanal immer druckdicht ist, so dass keine ungefilterte Flüssigkeit in den Sammelkanal gelangt. An die Auslassöffnung kann eine Leitung mit einem Ventil, beispielsweise einem Wasserhahn, angeschlossen sein. Die Funktionsschicht kann so gewählt werden, dass ihre Poren kleiner sind als die auszufilternden Stoffe. Unter zu filternder Flüssigkeit im Sinne der Erfindung wird ein Dispersionsmittel mit darin enthaltenen gasförmigen, flüssigen oder festen Stoffen verstanden, insbesondere Lösungen, Hydrosole, Blasensysteme, Emulsionen und Suspensionen.

Bei einer besonders bevorzugten Ausführungsform sind mehrere Filterelemente hintereinander und voneinander beabstandet an den Sammelkanal angeschlossen. Auf diese Weise kann die Filterfläche bei geringem Platzbedarf erhöht werden. Wegen der beabstandeten Anordnung kann Flüssigkeit allseitig, insbesondere von den beiden großflächigen Seiten in die Membran gepresst werden. Dies ist insbesondere vorteilhaft, wenn das Innere der Flachmembran als Trägerschicht ausgebildet ist, die allseitig an der Außenoberfläche eine Funktionsschicht aufweist. Das Filtrat kann daher über nahezu die gesamte freie Außenfläche in die Membran gedrückt und aus dem Innern der Flachmembran abgeführt werden.

Unterhalb des Filterelements ist ein Sedimentationsraum vorgesehen. Durch diese Maßnahme können sich Sedimente unterhalb des Filterelements ablagern, die zumindest durch den Durchmesser des Sammelkanals von dem Gehäuseboden beabstandet sind. Die Verstopfung der Filterflächen wird verhindert oder verlangsamt.

Bei einer bevorzugten Weiterbildung weist der Sedimentationsraum eine verschließbare Auslassöffnung auf. Abgelagerte Sedimente können entfernt werden. Außerdem können die Filterelemente sowie das Gehäuse gereinigt beziehungsweise gespült werden.

Das Gehäuse kann aus Kunststoff, Keramik oder Edelstahl hergestellt sein. Der Vorteil des Kunststoffgehäuses liegt in seinem geringen Gewicht und in seiner guten Korrosionsbeständigkeit, der des Edelstahlgehäuses in seiner Druckstabilität.

Die Filterelemente können besonders einfach entnommen und gereinigt werden, wenn das Gehäuse eine Reinigungsöffnung aufweist. Es versteht sich, dass wegen der Druckbeaufschlagung der zu filternden Flüssigkeit die Reinigungsöffnung druckdicht verschließbar ist, beispielsweise durch einen aufschraubbaren Deckel. Alternativ kann das Gehäuse auch mehrteilig aufgebaut sein, so dass das Gehäuse zur Reinigung zerlegt werden kann.

Um den Druck der zu filternden Flüssigkeit im Gehäuse zu erhöhen, kann der Flüssigkeitseinlassöffnung oder dem Gehäuse eine Pumpe zugeordnet sein. Bei bestimmten Anwendungen kann ein Druck von 1 bis 7 bar ausreichend sein. Eine zusätzliche Druckbeaufschlagung der zu filternden Flüssigkeit kann insbesondere bei Funktionsschichten mit geringer Porengröße notwendig sein, um die Funktionsweise der Filtrationsvorrichtung sicher zu stellen.

Die Aufgabe wird auch gelöst durch eine Filtrationsvorrichtung mit mehreren als Flachmembranen ausgebildeten Filterelementen, die voneinander beabstandet sind.und deren Innenräume mit einem Sammelkanal druckdicht verbunden sind, wobei im Wesentlichen die gesamte Außenoberfläche jedes Filterelements als Filterfläche ausgebildet ist. Eine solche Filtrationseinrichtung kann beispielsweise in ein eine zu filternde Flüssigkeit enthaltendes Becken eingetaucht werden, wobei der hydrostatische Druck die Flüssigkeit in die Membranen drückt. Die eingetauchten Filterelemente sind bis auf wenige Stellen, beispielsweise die Verbindungsstelle mit dem Sammelkanal, vollständig von der Flüssigkeit umgeben. Die Außenoberfläche jedes Filterelements steht daher als Filterfläche zur Verfügung. Die beabstandete Anordnung erlaubt außerdem die Reinigung der Filterelemente, indem Luft oder Ozon an den Filterflächen entlang geströmt wird. Der sich ansammelnde Filterkuchen kann durch diese Maßnahme besonders einfach entfernt werden.

Das Filterelement weist einen oder mehrere Filtratabführkanäle auf. Das Abführen des Filtrats aus dem Filterelement, insbesondere aus dessen Inneren, wird dadurch erleichtert. Wenn eine Trägerschicht vorhanden ist, sind die Filtratabführkanäle vorzugsweise in der Trägerschicht angeordnet.

Bei einer besonders bevorzugten Weiterbildung sind die Filtratabführkanäle fächerförmig angeordnet. Die Filtratabführkanäle sind dabei auf den Sammelkanal ausgerichtet, um die Filtratabführung zu beschleunigen.

Die Filtratabführkanäle können grundsätzlich beliebige Querschnittsformen aufweisen. Bevorzugt ist es jedoch, wenn sie einen im Wesentlichen kreisförmigen oder elliptischen oder ovalen oder rechteckigen oder einen beliebigen vieleckigen Querschnitt aufweisen.

Das Filterelement wird einfach hergestellt, da es aus zwei Filterelementhälften besteht. Jede Filterelementhälfte kann eine Trägerschicht und eine Funktionsschicht oder nur eine Funktionsschicht aufweisen. Die Trägerschicht und Funktionsschicht können aus grünen Schichten gewonnen werden, wobei Schichten, die Keramikteilchen enthalten, aber noch nicht gesintert sind, grüne Schichten genannt werden. Insbesondere wenn die Schichten grüne Schichten sind, können die eine Funktionsschicht tragenden Trägerschichten der Filterelementhälften vor dem Sintern miteinander laminiert werden. Nach dem Sintern erhält man ein Filterelement, das außen feinporige Filterflächen und innen eine grobporigere Struktur aufweist, durch die das Filtrat abgeführt werden kann.Wenn die Filterhälften jeweils ausschließlich aus einer Funktionsschicht bestehen, können auch diese als grüne Schichten laminiert werden. Die Filterelementhälften oder das gesamte Filterelement können jedoch auch durch Extrusion hergestellt werden.

Die in den grünen Schichten eingesetzten keramischen Werkstoffe sind vorzugsweise von Metall(misch)oxiden und Carbiden, Nitriden, Boriden, Siliciden und Carbonitriden von Metallen und Nichtmetallen abgeleitet. Beispiele hierfür sind Al₂O₃, teil- und vollstabilisiertes ZrO₂, Mullit, Cordierit, Perowskite, Spinelle, zum Beispiel BaTiO₃, PZT, PLZT, sowie SiC, Si₃N₄, B₄C, BN, MoSi₂, TiB₂, TiN, TiC.und Ti(C,N). Es versteht sich, dass diese Aufzählung nicht vollständig ist. Selbstverständlich können auch Mischungen von Oxiden bzw. Nichtoxiden und Mischungen aus Oxiden und Nichtoxiden eingesetzt werden.

Die Filtratabführkanäle werden besonders einfach realisiert , da zumindest bei einer Filterelementhälfte Rinnen an der der anderen Filterelementhälfte zugewandten Oberfläche ausgebildet sind. Die Rinnen werden vorzugsweise durch Fräsen der grünen Trägerschicht ausgebildet. Dabei können Rinnen nur in einer oder beiden Trägerschichten vorgesehen sein. Wenn die Trägerschichten laminiert sind, können die Rinnen versetzt angeordnet sein oder sich gegenüber liegen. Liegen sie sich gegenüber, werden im Filterelement Kanäle mit großem Querschnitt ausgebildet.

Nahezu beliebige Filterelementgeometrien lassen sich realisieren, wenn die Filterelementhälften jeweils durch Foliengießen einer grünen Schicht mit anschließender Sinterung hergestellt sind. Die Filterelemente können beispielsweise kreisrund, quadratisch oder rechteckig sein. Einerseits lassen sich miniaturisierte Filteranordnungen realisieren, bei denen durch fünf Filterelemente eine Filterfläche von 0,1 m² realisiert wird. Andererseits können durch das Foliengießen sehr großflächige Filterelemente, beispielsweise für die Meerwasserentsalzung hergestellt werden. Beispielsweise können die Filtrationselemente bis zu 0,5 m breit und auf eine beliebige Länge zugeschnitten sein. Somit lassen sich aus mehreren Filterelementen aufgebaute Filtermodule mit einer Filterfläche von beispielsweise 45 m² herstellen.

Bei einer bevorzugten Ausführungsform ist das Filterelement in den Sammelkanal dichtend ein-, aufgesteckt oder eingeklebt. Wenn es eingesteckt oder aufgesteckt ist, kann es zum Reinigen und insbesondere zum Auskochen leicht der Filtrationsvorrichtung entnommen werden. Es ist jedoch auch denkbar, den Sammelkanal mit dem oder den Filterelementen einstückig auszubilden, um eine gute Abdichtung, insbesondere eine druckresistente Abdichtung zwischen den Sammelkanal und den Filterelementen zu erzielen.

Bei einer Weiterbildung ist zur Abdichtung ein O-Ring vorgesehen. Diese Maßnahme ermöglicht eine wirksame und einfache Abdichtung.

Bei einer bevorzugten Ausgestaltung der Erfindung weisen die Filterelemente Poren in einer Funktionsschicht mit einer Porengröße ≤ 300 nm auf. Die verwendete Porengröße hängt vom Einsatzbereich der Filtrationsvorrichtung ab. Beispielsweise ist zur Filterung von Bakterien die Porengröße bevorzugt ≤ 150 nm und für die Filterung von Viren bevorzugt ≤ 70 nm.

Vorzugsweise ist die Filtrationsvorrichtung in einem flüssigkeitstransportierenden Leitungssystem angeordnet. So kann sie in einem Wasserleitungssystem eines Gebäudes, aber auch in Schiffen oder Caravans oder dergleichen eingesetzt werden. Insbesondere bei Schiffen, Caravans oder dergleichen kann sie auch in Flüssigkeitsbehälter eingetaucht werden.

Bei einer weiteren Ausführungsform sind zumindest die mit der Flüssigkeit in Berührung kommenden Flächen der Filtrationsvorrichtung, insbesondere des Gehäuses und des Sammelkanals, mit einem Biozid beschichtet. Durch diese Maßnahme wird die Verstopfung der Poren in Folge von Bakterienvermehrung innerhalb der Filtrationsvorrichtung vermieden.

Das Filtrationsergebnis kann verbessert werden, wenn mehrere Filtrationsvorrichtungen kaskadiert sind. Insbesondere kann eine Filtrationsvorrichtung mit Filterelementen einer ersten Porengröße für eine Grobfilterung von einer Filtrationsvorrichtung mit Filterelementen einer zweiten geringeren Porengröße gefolgt sein. So können beispielsweise in der ersten Filtrationsvorrichtung Bakterien und in der zweiten Filtrationsvorrichtung Viren ausgefiltert werden.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen.

### Zeichnung

Ein Ausführungsbeispiel der erfindungsgemäßen Filtrationsvorrichtung ist in der schematischen Zeichnung dargestellt und wird in der nachfolgenden Beschreibung erläutert. Es zeigt:
- **Fig. 1**: eine dreidimensionale Ansicht einer Filtrationsvorrichtung;
- **Fig. 2**: eine Darstellung von vier hintereinander angeordneten Filterelementen;
- **Fig. 3**: eine alternative Ausführungsform eines Filterelements;
- **Fig. 4**: eine Darstellung von drei hintereinander angeordneten Filterelementen in einer Halterung.

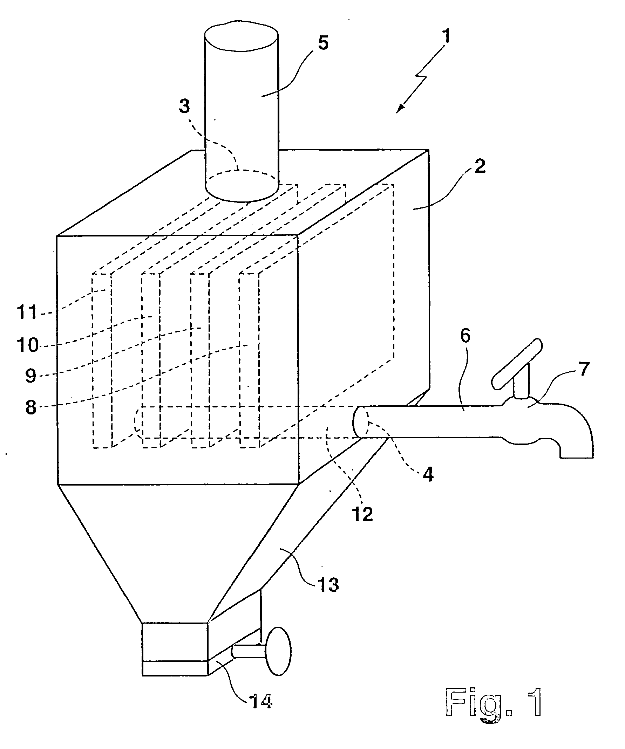

**Fig. 1** zeigt eine Filtrationsvorrichtung 1, die ein Gehäuse 2 mit einer Flüssigkeitseinlassöffnung 3 und einer Filtratauslassöffnung 4 umfasst. Die Flüssigkeitseinlassöffnung 3 ist mit einer Zuleitung 5 und die Filtratauslassöffnung 4 mit einer Leitung 6, die an ihrem freien Ende ein als Wasserhahn ausgebildetes Ventil 7 aufweist, verbunden. In dem Gehäuse 2 sind als Flächenmembranen ausgebildete Filterelemente 8 bis 11 hintereinander und zueinander beabstandet angeordnet. Die rechteckig ausgebildeten Filterelemente 8 bis 11 sind mit einem Sammelkanal 12 verbunden, der in die Filtratauslassöffnung 4 mündet. Zu filternde Flüssigkeit wird dem Gehäuse 2 unter Druck zugeführt. Da die Filterelemente 8 bis 11 voneinander beabstandet sind, kann Flüssigkeit im Wesentlichen von zwei Seiten in jedes Filterelement eindringen. Die Filterelemente 8 bis 11 weisen im Ausführungsbeispiel jeweils an der Außenoberfläche feinporige Funktionsschichten und dazwischen liegende grobporige Trägerschichten auf, über die das Filtrat aus dem Innern der Filterelemente 8 bis 11 dem Sammelkanal 12 zugeführt wird. In seinem unteren Teil weist das Gehäuse einen sich verjüngenden Sedimentationsraum 13 auf, in dem Sedimente aufgefangen werden. Zum Entfernen der Sedimente ist eine verschließbare Auslassöffnung 14 vorgesehen. Die Auslassöffnung 14 befindet sich unterhalb der Flüssigkeitseinlassöffnung 3. Sind beide Öffnungen 3, 14 geöffnet, können das Gehäuse 2 und die Filterelemente 8 bis 11 gespült werden und insbesondere Ablagerungen von den Poren der Funktionsschichten der Filterelemente entfernt werden. Weiterhin kann durch ein Öffnen der Auslassöffnung 14 bei geöffneter Flüssigkeitseinlassöffnung 3 und geschlossenem Ventil 7 die erfindungsgemäße Vorrichtung kurz geschlossen werden und die Entnahme der über die Flüssigkeitseinlassöffnung 3 zugeführten Flüssigkeit ist ohne Druckverlust und ohne zusätzliche Filterung über die Auslassöffnung 14 möglich.

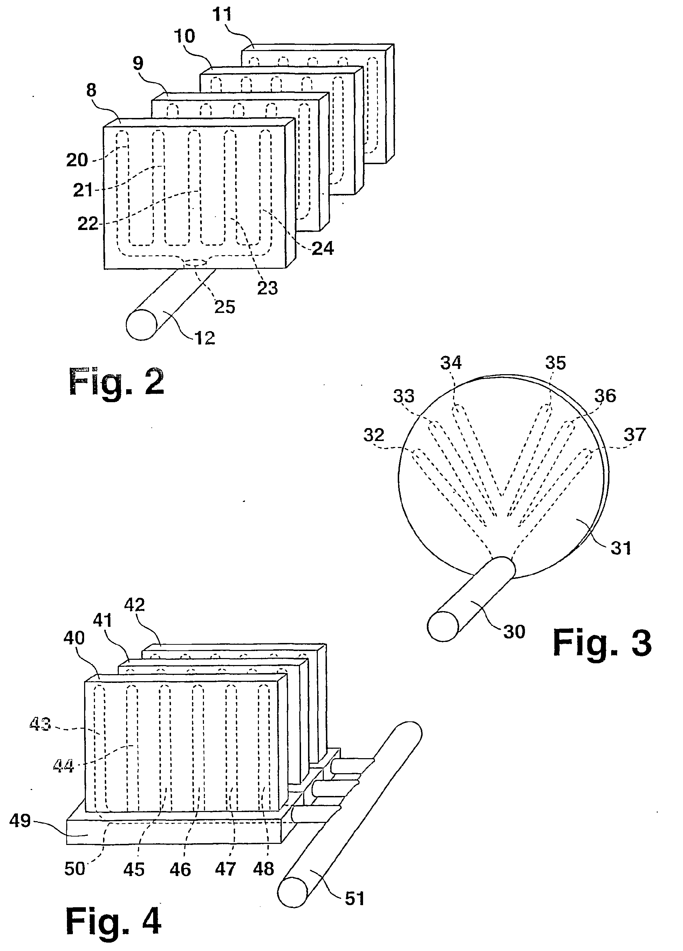

**Fig. 2** zeigt die hintereinander angeordneten Filterelemente 8 bis 11, wobei Filtratabführkanäle 20 bis 24 angedeutet sind, die im Innern der Filterelemente 8 bis 11 vorgesehen sind. Die Filtratabführkanäle sind in der jeweiligen Trägerschicht der Filterelemente 8 bis 11 angeordnet und verlaufen im Wesentlichen vertikal und parallel zueinander. Sie münden in einer Öffnung 25, die mit dem Sammelkanal 12 dichtend verbunden ist, wobei die Filterelemente 8 bis 11 im Ausführungsbeispiel mit dem Sammelkanal 12 verklebt sind. Die Trägerschicht der Filterelemente 8 bis 11 ist durch Lamination der grünen Trägerschichten zweier Filterelementhälften entstanden, an deren Oberflächen Rinnen durch Fräsen ausgebildet wurden. Die sich gegenüberliegenden Rinnen bilden die Filtratabführkanäle 20 bis 24.

**Fig. 3** zeigt ein auf einen Sammelkanal 30 aufgestecktes kreisrundes Filterelement 31. Die Filtratabführkanäle 32 bis 37 sind fächerförmig angeordnet und auf den Sammelkanal ausgerichtet. Im Ausführungsbeispiel ist das Filterelement 31 aus zwei Filterelementhälften aufgebaut, die jeweils eine Funktionsschicht darstellen. Die Filtratabführkanäle 32 bis 37 sind jeweils aus zwei sich gegenüber liegenden Rinnen gebildet. In die den Filterelementhälften zugrunde liegenden grünen Schichten wurden die Rinnen eingebracht. Anschließend wurden die Filterelementhälften laminiert und gesintert.

**Fig. 4** zeigt eine Anordnung mit drei Filterelementen 40 - 42 mit jeweils sechs im Innern der Filterelemente 40 - 42 angeordneten Filtratabführkanälen 43 - 48, die vertikal und parallel zueinander verlaufen. Die Filtratabführkanäle 43 - 48 sind an ihrem oberen Ende verschlossen und enden anderenends jeweils in einer nicht dargestellten Öffnung an einer Schmalseite des Filterelements 40 - 42. Die Filterelemente 40 - 42 sind druckdicht in eine als Kunststoffschuh ausgebildete Halterung 49 eingesteckt, die Kanäle 50 aufweist, in die das Filtrat aus den Filtratabführkanälen 43 - 48 abläuft. Die Kanäle 50 sind wiederum mit einem Sammelkanal 51 verbunden. In diesem Ausführungsbeispiel ist der. Sammelkanal 51 im Wesentlichen neben den Filterelementen 40 - 42 angeordnet.

Bei einer Filtrationsvorrichtung 1 umfassend ein druckbeständiges Gehäuse 2 mit einer Flüssigkeitseinlassöffnung 3 und einer Filtratauslassöffnung 4, in die ein Sammelkanal 12 mündet, ist an den Sammelkanal 12 mindestens ein als Flachmembran ausgebildetes Filterelement 8-11 druckdicht angeschlossen. Diese Vorrichtung erlaubt einen hohen Flüssigkeitsdurchsatz bei kompakter Bauweise.

## Patentansprüche

1. Filtrationsvorrichtung (1) umfassend ein druckbeständiges Gehäuse (2) mit einer Flüssigkeitseinlassöffnung (3) und einer Filtratauslassöffnung (4), in die ein Sammelkanal (12; 30; 51) mündet, an den mindestens ein als keramische Flachmembran ausgebildetes Filterelement (8-11; 31; 40 - 42) druckdicht angeschlossen ist, wobei das Filterelement (8 - 11; 31, 40 - 42) einen oder mehrere Filtratabführkanäle (20 - 24; 32 - 37; 43 - 48) aufweist und wobei unterhalb des Filterelements (8 - 11; 31; 40 - 42) ein Sedimentationsraum (13) vorgesehen ist, wobei das Filterelement (8 - 11, 40 - 42) aus zwei Filterelementhälften hergestellt ist und zumindest bei einer Filterelementhälfte Rinnen an der der anderen Filterelementhälfte zugewandten Oberfläche ausgebildet sind.

2. Filtrationsvorrichtung nach Anspruch 1, **dadurch gekennzeichnet, dass** mehrere Filterelemente (8 - 11; 31; 40 -42) hintereinander und voneinander beabstandet an den Sammelkanal (12; 30; 51) angeschlossen sind.

3. Filtrationsvorrichtung nach Anspruch 1 oder Anspruch 2, **dadurch gekennzeichnet, dass** der Sedimentationsraum (13) eine verschließbare Auslassöffnung (14) aufweist.

4. Filtrationsvorrichtung nach einem der vorhergehenden Ansprüche, **dadurch gekennzeichnet, dass** das Gehäuse (2) aus Kunststoff, Keramik oder Edelstahl hergestellt ist.

5. Filtrationsvorrichtung nach einem der vorhergehenden Ansprüche, **dadurch gekennzeichnet, dass** das Gehäuse (2) eine Reinigungsöffnung aufweist.

6. Filtrationsvorrichtung nach einem der vorhergehenden Ansprüche, **dadurch gekennzeichnet, dass** der Flüssigkeitseinlassöffnung (3) oder dem Gehäuse (2) eine Pumpe zugeordnet ist.

7. Filtrationsvorrichtung nach einem der vorhergehenden Ansprüche, **dadurch gekennzeichnet, dass** die Filtratabführkanäle (32 - 37) fächerförmig angeordnet sind.

8. Filtrationsvorrichtung nach mindestens einem der Ansprüche 1 bis 7, **dadurch gekennzeichnet, dass** die Filterelementhälften jeweils durch Foliengießen oder durch Extrusion einer grünen Schicht mit anschließender Sinterung hergestellt sind.

9. Filtrationsvorrichtung nach einem der vorhergehenden Ansprüche, **dadurch gekennzeichnet, dass** das oder die Filterelemente (8 - 11; 31 ) in den Sammelkanal (12; 30) dichtend ein-, aufgesteckt oder eingeklebt sind.

10. Filtrationsvorrichtung nach einem der vorhergehenden Ansprüche, **dadurch gekennzeichnet, dass** die Filterelemente (8 - 11; 31; 40 - 42) Poren in einer Funktionsschicht mit einer Porengröße ≤ 300 nm aufweisen.

## Claims

1. Filtration device (1) comprising a pressure-resistant housing (2) with a liquid inlet opening (3) and an outlet opening (4) for filtered matter, into which a collecting channel (12; 30; 51) terminates which is connected in a pressure-tight manner to at least one filter element (8-11; 31; 40-42) which is designed as a ceramic flat membrane, wherein the filter element (8-11; 31; 40-42) comprises one or more channels (20-24; 32-37; 43-48) for discharging filtered matter, and wherein a sedimentation space (13) is provided below the filter element (8-11; 31; 40-42), wherein the filter element (8-11, 40-42) consists of two filter element halves and at least one filter element half has grooves which are formed on the surface facing the other filter element half.

2. Filtration device according to claim 1, **characterized in that** several filter elements (8-11; 31; 40-42) are connected, one after another and being spaced apart from each other, to the collecting channel (12; 30; 51).

3. Filtration device according to claim 1 or 2, **characterized in that** the sedimentation space (13) comprises an outlet opening (14) which can be closed.

4. Filtration device according to any one of the preceding claims, **characterized in that** the housing (2) is produced from plastic material, ceramic or stainless steel.

5. Filtration device according to any one of the preceding claims, **characterized in that** the housing (2) has an opening for cleaning.

6. Filtration device according to any one of the preceding claims, **characterized in that** a pump is associated with the liquid inlet opening (3) or the housing (2).

7. Filtration device according to any one of the preceding claims, **characterized in that** the channels (32 - 37) for discharging filtered matter are disposed in the shape of a fan.

8. Filtration device according to at least one of the claims 1 through 7, **characterized in that** the filter element halves are each produced through foil casting or extrusion of a green layer and subsequent sintering.

9. Filtration device according to any one of the preceding claims, **characterized in that** the filter element(s) (8-11; 31) is/are inserted, stuck onto or glued into the collecting channel (12; 30) in a sealing manner.

10. Filtration device according to any one of the preceding claims, **characterized in that** the filter elements (8-11; 31; 40-42) comprise pores of a pore size ≤300nm in a functional layer.

## Revendications

1. Dispositif de filtration (1) comportant un carter (2) résistant à la pression, muni d'une ouverture d'admission du liquide (3) et d'une ouverture d'évacuation du filtrat (4) dans laquelle débouche un conduit collecteur (12 ; 30 ; 51), auquel est raccordé, de manière étanche à la pression, au moins un élément filtrant (8-11 ; 31 ; 40-42), conçu sous forme de membrane plane en céramique, l'élément filtrant (8-11 ; 31 ; 40-42) comportant un ou plusieurs canaux d'évacuation du filtrat (20-24 ; 32-37 ; 43-48) et un compartiment de sédimentation (13) étant prévu en dessous de l'élément filtrant (8-11 ; 31 ; 40-42), dans lequel dispositif l'élément filtrant (8-11, 40-42) est formé par deux demi-éléments filtrants et, sur au moins un des demi-éléments filtrants, des cannelures sont réalisées sur la surface orientée vers l'autre demi-élément filtrant.

2. Dispositif de filtration selon la revendication 1, **caractérisé en ce que** plusieurs éléments filtrants (8-11; 31 ; 40-42) sont raccordés, les uns derrière les autres et à distance les uns des autres, au conduit collecteur (12; 30; 51).

3. Dispositif de filtration selon la revendication 1 ou 2, **caractérisé en ce que** le compartiment de sédimentation (13) comporte une ouverture d'évacuation (14) apte à être fermée.

4. Dispositif de filtration selon l'une quelconque des revendications précédentes, **caractérisé en ce que** le carter (2) est réalisé en matière plastique, céramique ou acier inoxydable.

5. Dispositif de filtration selon l'une quelconque des revendications précédentes, **caractérisé en ce que** le carter (2) comporte une ouverture de nettoyage.

6. Dispositif de filtration selon l'une quelconque des revendications précédentes, **caractérisé en ce qu'**une pompe est associée à l'ouverture d'admission du liquide (3) ou au carter (2).

7. Dispositif de filtration selon l'une quelconque des revendications précédentes, **caractérisé en ce que** les canaux d'évacuation du filtrat (32-37) sont agencés en forme d'éventail.

8. Dispositif de filtration selon au moins l'une quelconque des revendications 1 à 7, **caractérisé en ce que** les demi-éléments filtrants sont réalisés par coulée en feuilles ou par extrusion d'une couche à l'état vert et par un frittage consécutif.

9. Dispositif de filtration selon l'une quelconque des revendications précédentes, **caractérisé en ce que** le ou les éléments filtrants (8-11 ; 31) sont enfichés, emmanchés ou collés de manière étanche dans le conduit collecteur (12 ; 30) .

10. Dispositif de filtration selon l'une quelconque des revendications précédentes, **caractérisé en ce que** les éléments filtrants (8-11 ; 31 ; 40-42) comportent des pores dans une couche fonctionnelle avec une grosseur des pores ≤ 300 nm.
